# EUROPÄISCHE PATENTSCHRIFT

(11) **EP 2 607 298 B1**
(45) Veröffentlichungstag und Bekanntmachung des Hinweises auf die Patenterteilung: **10.06.2015**
(21) Anmeldenummer: 11401669.4
(22) Anmeldetag: 19.12.2011
(51) Int. Cl.: B67D 1/16, A47J 31/44

(54) **Getränkebereiter**
beverage preparation apparatus
Préparateur de boissons

(43) Veröffentlichungstag der Anmeldung: 26.06.2013
(73) Patentinhaber: Miele & Cie. KG, 33332 Gütersloh (DE)
(72) Erfinder: Tembaak, Jutta, 49492 Westerkappeln (DE)

(56) Entgegenhaltungen:
- EP-A1- 2 342 997
- WO-A2-2005/099535
- DE-U1-202007 006 302
- US-A1- 2005 168 115

## Beschreibung

Die Erfindung betrifft einen Getränkebereiter nach dem Oberbegriff des Patentanspruches 1.

Getränkebereiter können beispielsweise Espressomaschinen, Kaffeemaschinen, Kaffeeautomaten, Teebereiter, Saftzentrifugen oder ähnliche Geräte beziehungsweise Kombinationen aus den genannten Geräten sein.

Aus der WO 2009/027053 A1 oder der WO 2005/099535 A2 ist zum Beispiel ein Kaffeeautomat als Getränkebereiter bekannt, der als Einbaugerät in einem Küchenschrank ausgeführt ist. In einer Tür des Getränkebereiters ist hierbei ein Ausgabebereich in Form einer Vertiefung ausgebildet, in den ein Getränkeauslauf mit mehreren Ausgabedüsen mündet und in dem eine weitere Ausgabedüse zur Abgabe einer Flüssigkeit oder zur Abgabe von Wasserdampf vorhanden ist. Ein zum Abstellen eines mit dem Getränk zu befüllenden Gefäßes geeigneter Boden wurde hierbei als eine für Resttropfen des Getränkes oder anderer Flüssigkeiten durchlässige Abtropfplatte ausgeführt. Unterhalb der Abtropfplatte weist der Getränkebereiter eine entnehmbare Abtropfschale zum Auffangen von Flüssigkeitsresten auf. Die Abtropfschale ist erforderlich, da nach der Abgabe des Getränkes über die Ausgabedüsen einzelne Tropfen auf die Abtropfplatte gelangen können, wenn das Gefäß bereits aus dem Getränkebereiter entnommen wurde. Zudem werden derartige Getränkebereiter regelmäßig gespült und gereinigt, wobei die aus den Ausgabedüsen austretende Spülflüssigkeit beziehungsweise Reinigungsflüssigkeit in der Abtropfschale aufgefangen wird. Wegen dieser häufig erfolgenden Spül- und Reinigungsvorgänge muss die Abtropfschale ein relativ großes Volumen aufweisen.

Aus der EP 2 342 997 A1 ist ein Getränkebereiter bekannt, bei dem die Abtropfschale als Modul mit anderen Behältnissen aus dem Gerät herausgezogen werden kann. Zur Bereitstellung einer bequemen Handhabung ist ein Federmechanismus vorgesehen, der eine Ausschubkraft bereitstellt. Ferner wirkt Abtropfschale mit einem als Zahnrad ausgeführtem Dämpfungsglied zusammen, das mit seinen Zähnen in einer korrespondierenden Zahnleiste eingreift.

Aus der US 20050168115 A1 ist ein Möbel mit einer Schublade bekannt. Die Schublade ist an seitlichen Schienen geführt. An den Seiten des Schubs sind jeweils Rollen gelagert, die in den Schienen laufen und so das Gleiten der Schublade bereitstellen. Aus der US 20050168115 A1 ist ein Möbel mit einer Schublade bekannt, die mit einem mittels eines Antriebs angetriebenen Ausstoßhebel versehen ist, um die Schublade bereichsweise zu öffnen.

Vielfach machen Getränkebereiter im Allgemeinen und Kaffeevollautomaten im Besonderen auf den ersten Blick einen grundsoliden und optisch hochwertigen Eindruck, der sich jedoch verliert, wenn die Abtropfschale aus dem Gerät entfernt werden soll. Da die Abtropfschale in dem Getränkebereiter installiert ist, bereitet es nämlich häufig erhebliche Mühe, sie zur Entleerung und Reinigung aus dem Getränkebereiter zu entfernen, ohne dabei die in der Abtropfschale enthaltene Flüssigkeit zu verschütten. Dies gilt insbesondere dann, wenn die Abtropfschale einen sehr hohen Füllstand aufweist. Durch eine zu ruckartige Bewegung der Abtropfschale wird die darin enthaltene Flüssigkeit in Bewegung versetzt und kann als Folge dessen über den Rand der Abtropfschale schwappen. Dies führt jedoch dazu, dass Flüssigkeitsreste in den Innenraum des Getränkebereiters oder in dessen Umgebung gelangen, was in hohem Maße unangenehm ist und einen zusätzlichen Reinigungsaufwand erfordert. Dabei stellt nicht nur das Herauslösen der Abtropfschale aus dem Getränkebereiter ein Problem dar, sondern vielfach auch die während der Entnahme erforderliche Bewegung der Abtropfschale.

Der Erfindung stellt sich somit das Problem, einen Getränkebereiter zur Verfügung zu stellen, bei dem die mit Flüssigkeitsresten befüllte Abtropfschale ohne Schwierigkeiten und ohne ein Überschwappen der in der Abtropfschale enthaltenen Flüssigkeit aus dem Getränkebereiter entnommen werden kann.

Erfindungsgemäß wird dieses Problem durch einen Getränkebereiter mit den Merkmalen des Patentanspruches 1 gelöst.

Vorteilhafte Ausgestaltungen und Weiterbildungen der Erfindung ergeben sich aus den jeweils nachfolgenden Unteransprüchen.

Ein Getränkebereiter zur Herstellung eines Getränkes mit einem Getränkeauslauf, der oberhalb einer zum Abstellen eines mit dem Getränk zu befüllenden Gefäßes geeigneten Abtropfplatte angeordnet ist, wobei unterhalb der Abtropfplatte eine zur Entleerung und/oder zur Reinigung aus dem Getränkebereiter entnehmbare Abtropfschale zum Auffangen von Flüssigkeitsresten vorhanden ist, wurde erfindungsgemäß dahingehend weitergebildet, dass an der Unterseite der Abtropfschale oder im Boden des Getränkebereiters, unterhalb der Abtropfschale, mindestens eine die Bewegung der Abtropfschale unterstützende Führungsrolle vorhanden ist und/oder der Getränkebereiter mindestens eine mit der Abtropfschale korrespondierende Ausstoßvorrichtung aufweist.

Unter der Abtropfschale befindet sich folglich eine Art Gleithilfe in Form der wenigstens einen Führungsrolle, auf der die Abtropfschale geführt und leichtgängig aus dem Getränkebereiter entnommen werden kann. Der Getränkebereiter nach der Erfindung weist somit einen hochwertigen Eindruck auf, weil das Entnehmen der Abtropfschale auf einfache Weise, ohne ein Überschwappen der Flüssigkeitsreste erfolgen kann.

In dem Bestreben den Komfort eines erfindungsgemäßen Getränkebereiters weiter zu verbessern, wird ferner vorgeschlagen, dass der Getränkebereiter an Stelle der Führungsrolle oder in Verbindung mit einer Führungsrolle mindestens eine mit der Abtropfschale korrespondierende Ausstoßvorrichtung aufweist.

Mit einer derartigen Ausstoßvorrichtung kann zumindest ein Teil der Bewegung der Abtropfschale automatisiert werden und ist damit unabhängig vom Geschick des Benutzers, der die Abtropfschale aus dem Getränkebereiter entfernen möchte.

Als Ausstoßvorrichtung kann zum Beispiel ein so genannter "Push-to-open-Mechanismus" dienen. Hierbei handelt es sich um einen mechanisch wirkenden Mechanismus, der einen durch die Kraft einer sich entspannenden Feder bewegbaren Stift aufweist, wobei die Aktivierung der Bewegung des Stiftes durch einen leichten Druck entgegen der Bewegungsrichtung des Stiftes erfolgt. Dieser Gegendruck löst eine Sperre innerhalb des Push-to-open-Mechanismus, so dass die Feder anschließend ihre Wirkung auf den Stift ausüben kann und dieser ausgefahren wird.

Die Ausstoßvorrichtung bringt dabei gerade so viel Kraft auf, dass eine volle Abtropfschale mit progressiv ansteigendem Kraftaufwand aus dem Getränkebereiter herausbewegt wird, ohne dass die Bewegungsenergie so groß wird, dass die in der Abtropfschale enthaltene Flüssigkeit überschwappt. Hierfür wird die Ausstoßvorrichtung so ausgelegt, dass sie in Abhängigkeit vom Gewicht der vollen Abtropfschale und dem Widerstand der Führungsrolle eine zu Beginn langsamere und anschließend beschleunigte Bewegung vollzieht, um letztlich die Abtropfschale in einer zur Entnahme geeigneten Endposition zum Stillstand zu bringen.

Gemäß einer ersten Ausgestaltung der Erfindung wird vorgeschlagen, dass an der Unterseite der Abtropfschale oder im Boden des Getränkebereiters, unterhalb der Abtropfschale, ein die Bewegung der Abtropfschale unterstützendes Führungsrollensystem mit mehreren Führungsrollen vorhanden ist. Durch den Einsatz eines Führungsrollensystems kann die Stabilität der Abtropfschale insgesamt verbessert werden, so dass die Gleiteigenschaften auf diese Weise optimierbar sind. Unter einem "Führungsrollensystem" wird dabei eine Mehrzahl vorhandener Führungsrollen verstanden, die in einer Baueinheit zusammengefasst oder einzeln zum Einsatz kommen können.

Zur Verlangsamung der Bewegung der Abtropfschale wird darüber hinaus vorgeschlagen, dass wenigstens eine Führungsrolle eine Dämpfung aufweist. Mit anderen Worten wird die Führungsrolle in ihrer freien Beweglichkeit abgebremst, um dadurch eine langsamere und ruckfreie Bewegung der Abtropfschale zu erreichen.

Eine derartige Dämpfung kann entsprechend einem weitergehenden Vorschlag nach der Erfindung beispielsweise durch eine Bremse oder eine reibungsintensive Beschichtung mindestens einer der Führungsrollen oder ihrer Aufnahmen erreicht werden. Eine andere Möglichkeit zur Umsetzung einer Dämpfung besteht darin, dass mindestens ein Bremssteg zwischen den Führungsrollen angeordnet ist. Dieser Bremssteg kann zum Beispiel aus einem reibungsintensiven Werkstoff bestehen. Als ein Beispiel sei an dieser Stelle ein Bremssteg aus einem Elastomerwerkstoff, wie Gummi, genannt.

Eine stabile Führung der Abtropfschale lässt sich erreichen, wenn gemäß einer anderen Ausgestaltung der Erfindung mehrere Führungsrollen hintereinander, in wenigstens einer Reihe unter der Abtropfschale angeordnet sind. Bevorzugt können demgemäß auch mehrere Reihen mit Führungsrollen vorgesehen werden.

Die Ausstoßvorrichtung kann einem weiterführenden Gedanken folgend an mindestens einer der Abtropfschale zugewandten Seite wenigstens einer Innenwand des Getränkebereiters vorgesehen werden und ist als eine aktivierbare, in Auszugsrichtung der Abtropfschale wirkende Ausstoßvorrichtung ausgeführt. Hierbei ist folglich die Ausstoßvorrichtung in dem Getränkebereiter installiert und wirkt auf die Abtropfschale ein.

Eine andere Ausführungsvariante besteht darin, dass die Abtropfschale mindestens eine aktivierbare, entgegen der Auszugsrichtung der Abtropfschale wirkende und mit wenigstens einer Innenwand des Getränkebereiters korrespondierende Ausstoßvorrichtung aufweist. In diesem Fall wird die Ausstoßvorrichtung unmittelbar an der Abtropfschale befestigt und wirkt mit einer korrespondierenden Gegenfläche im Getränkebereiter zusammen.

Wie bereits ausgeführt wurde, ist es von besonderer Bedeutung, dass die Ausstoßvorrichtung mit progressiv ansteigender Kraft auf die Abtropfschale einwirkt. Eine konkrete Umsetzung einer Ausstoßvorrichtung kann beispielsweise darin bestehen, dass die Ausstoßvorrichtung einen beweglichen Stift aufweist. Diese Variante stellt eine besonders einfache Ausführung einer Ausstoßvorrichtung dar.

Es besteht erfindungsgemäß ferner die Möglichkeit, die Bewegungsenergie der Ausstoßvorrichtung durch eine mechanische Feder, eine Pneumatik, eine Hydraulik, einen Elektromotor oder durch einen Elektromagneten bereitzustellen. Die Entscheidung für einen der genannten Mechanismen kann beispielsweise in Abhängigkeit des zur Verfügung stehenden Bauraumes innerhalb des Getränkebereiters oder mit Hinblick auf die Komfortansprüche beziehungsweise die zu erwartenden Kosten gefällt werden.

Die Erfindung wird nachfolgend anhand der beigefügten Zeichnungen näher erläutert. Die gezeigten Ausführungsbeispiele stellen keine Einschränkung auf die dargestellten Varianten dar, sondern dienen lediglich der Erläuterung eines Prinzips der Erfindung. Dabei sind gleiche oder gleichartige Bauteile mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Es zeigt
- Figur 1:: ausschnittsweise einen Blick in einen Getränkebereiter in einer Explosivdarstellung, mit einer Ausstoßvorrichtung an einer Abtropfschale
und
- Figur 2:: ausschnittsweise einen Blick in einen Getränkebereiter in einer Explosivdarstellung, mit einer an einer Innenwand des Getränkebereiters befestigten Ausstoßvorrichtung.

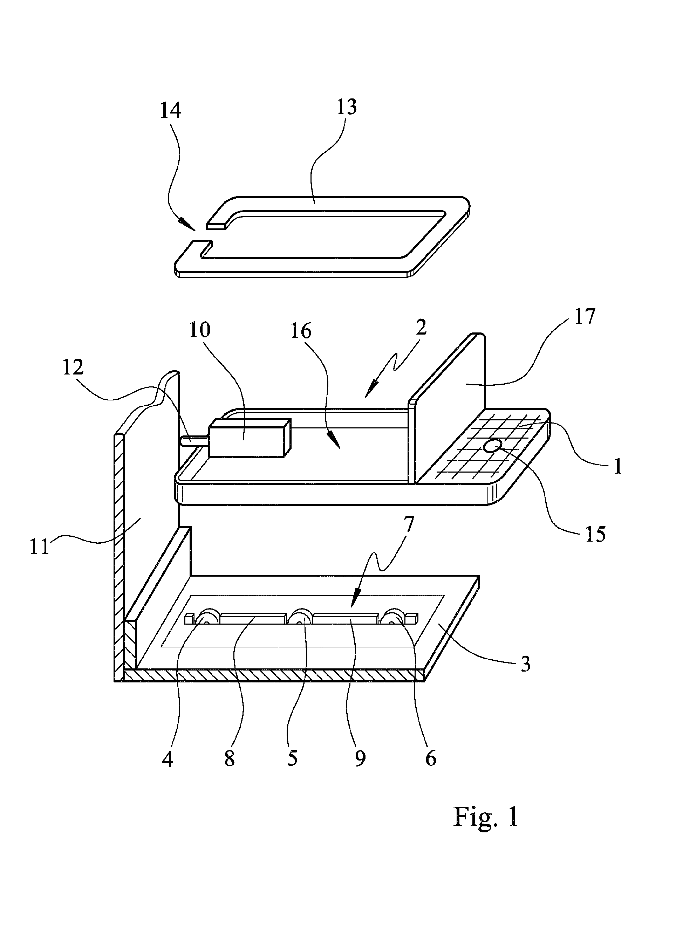

Die Figur 1 veranschaulicht im Rahmen einer Explosivdarstellung einen Blick in eine erste Ausführungsvariante eines erfindungsgemäßen Getränkebereiters. Dieser weist eine Abtropfschale 2 auf, die in ihrem frontseitigen Abschnitt über eine Abtropfplatte 1 mit einer für Flüssigkeitsreste durchlässigen Struktur verfügt. In der Mitte der Abtropfplatte 1 befindet sich ferner eine Öffnung 15, die der Erleichterung der Entnahme der Abtropfplatte 1 dient. Zudem ist diese Öffnung 15 geeignet, Flüssigkeitsreste aus einem nicht dargestellten Getränkeauslauf in den Innenraum 16 der Abtropfschale 2 abzuführen. Als Sichtschutz ist oberhalb der Abtropfschale 2 ferner eine Abdeckung 17 vorhanden, die im vorliegenden Fall plattenförmig ausgeführt und senkrecht zur Abtropfplatte 1 ausgerichtet ist. Im hinteren, rückwandnahen Bereich der Abtropfschale 2 weist diese eine Ausstoßvorrichtung 10 auf, die auf ihrer der Innenwand 11 des Getränkebereiters zugewandten Seite über einen Stift 12 verfügt, dessen Aufgabe es ist, sich gegen die Innenwand 11 des Getränkebereiters abzustützen. Um eine Bewegung der Abtropfschale 2 zu erreichen, wird der Stift 12 der Ausstoßvorrichtung 10 ausgefahren. Die Bewegung des Stiftes 12 erfolgt dabei mit progressiv ansteigendem Kraftverlauf. Dieser kann, wie im vorliegenden Fall, erreicht werden, indem die Ausstoßvorrichtung 10 als ein Elektromagnet ausgeführt ist, dessen progressiv zunehmender Kraftverlauf durch die Regelung der Stromzufuhr realisiert wird.

Eine weitere Besonderheit der Erfindung besteht darin, dass in den Boden 3 des Getränkebereiters ein Führungsrollensystem 7 eingebracht ist, dass vorliegend aus drei Führungsrollen 4, 5, 6 besteht, die in einer Reihe angeordnet sind. Die Führungsrollen 4, 5, 6 sind drehbar im Boden 3 des Getränkebereiters gelagert. Zwischen den Führungsrollen 4 und 5 sowie zwischen den Führungsrollen 5 und 6 ist jeweils ein Bremssteg 8 beziehungsweise 9 vorhanden, der aus einem Elastomerwerkstoff besteht und eine die Bewegung der Abtropfschale 2 geringfügig abbremsende Funktion ausübt, während die Führungsrollen 4, 5, 6 die Bewegung der Abtropfschale 2 verbessern und die Abtropfschale 2 insgesamt führen. Aus dieser speziellen Kombination zwischen optimaler Führung und gezieltem Dämpfen der Abtropfschale 2 besteht die Besonderheit dieser Lösung. Als zusätzlicher Schutz gegen ein Übertreten der in dem Innenraum 16 der Abtropfschale 2 vorhandenen Flüssigkeit über den Rand der Abtropfschale 2 hinaus ist bei diesem Beispiel zusätzlich ein Abdeckring 13 vorhanden, der auf den oberen Rand der Abtropfschale 2 aufgesetzt ist. Zur Fixierung des Abdeckringes 13 kann eine Klemm- oder Schnappverbindung vorgesehen werden. Im Bereich der Ausstoßvorrichtung 10 der Abtropfschale 2 verfügt der Abdeckring 13 über einen Schlitz 14.

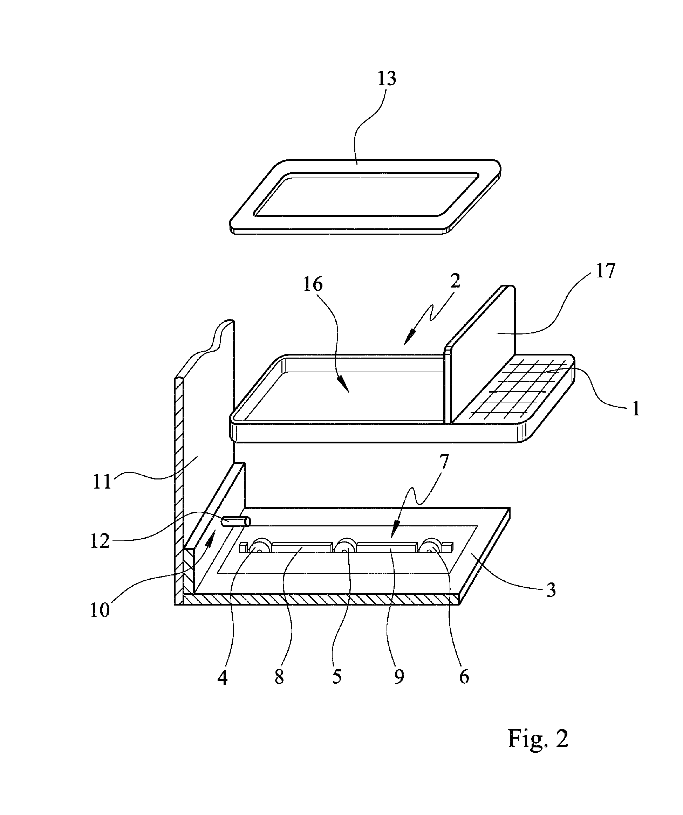

Die weitgehend zur Variante in Figur 1 baugleiche Ausführung eines erfindungsgemäßen Getränkebereiters in Figur 2 weist im Vergleich mit der Lösung in Figur 1 eine Ausstoßvorrichtung 10 auf, die an der Innenwand 11 des Getränkebereiters befestigt ist. Auch diese Ausstoßvorrichtung 10 verfügt über einen Stift 12, der mit progressiv ansteigendem Kraftverlauf ausgefahren werden kann. Hierbei handelt es sich um einen "Push-to-open-Mechanismus", wobei der Stift 12 gegen eine korrespondierende Fläche der Abtropfschale 2 wirkt, wenn diese in den Getränkebereiter eingesetzt ist. Auch die in der Figur 2 dargestellte Abtropfschale 2 wird zusätzlich mit einem Abdeckring 13 ausgestattet, wobei dieser keinen Schlitz aufweist und als in sich geschlossener Ring ausgeführt ist. Darüber hinaus verfügt die Abtropfplatte 1 im vorliegenden Fall nicht über eine Öffnung.

### Bezugszeichenliste:

- 1.: Abtropfplatte
- 2.: Abtropfschale
- 3.: Boden
- 4.: Führungsrolle
- 5.: Führungsrolle
- 6.: Führungsrolle
- 7.: Führungsrollensystem
- 8.: Bremssteg
- 9.: Bremssteg
- 10.: Ausstoßvorrichtung
- 11.: Innenwand (des Getränkebereiters)
- 12.: Stift (des Ausstoßvorrichtung)
- 13.: Abdeckring
- 14.: Schlitz
- 15.: Öffnung
- 16.: Innenraum
- 17.: Abdeckung

## Patentansprüche

1. Getränkebereiter zur Herstellung eines Getränkes mit einem Getränkeauslauf, der oberhalb einer zum Abstellen eines mit dem Getränk zu befüllenden Gefäßes geeigneten Abtropfplatte (1) angeordnet ist, wobei unterhalb der Abtropfplatte (1) eine zur Entleerung und/oder zur Reinigung aus dem Getränkebereiter entnehmbare Abtropfschale (2) zum Auffangen von Flüssigkeitsresten vorhanden ist,
**dadurch gekennzeichnet, dass**
im Boden (3) des Getränkebereiters, im mittleren Bereich unterhalb der Abtropfschale (2), mindestens eine die Bewegung der Abtropfschale (2) unterstützende Führungsrolle (4, 5, 6) vorhanden ist, auf der die Abtropfschale zur leichtgängigen Entnahme aus dem Getränkebereiter (2) geführt ist.

2. Getränkebereiter nach Anspruch 1,
**dadurch gekennzeichnet, dass**
der Getränkebereiter mindestens eine mit der Abtropfschale (2) korrespondierende Ausstoßvorrichtung (10) aufweist.

3. Getränkebereiter nach Anspruch 1 oder 2,
**dadurch gekennzeichnet, dass**
an der Unterseite der Abtropfschale (2) oder im Boden (3) des Getränkebereiters, unterhalb der Abtropfschale (2), ein die Bewegung der Abtropfschale (2) unterstützendes Führungsrollensystem (7) mit mehreren Führungsrollen (4, 5, 6) vorhanden ist.

4. Getränkebereiter nach Anspruch 1, 2 oder 3,
**dadurch gekennzeichnet, dass**
wenigstens eine Führungsrolle (4, 5, 6) eine Dämpfung aufweist.

5. Getränkebreiter nach Anspruch 4,
**dadurch gekennzeichnet, dass**
die Dämpfung durch eine Bremse oder eine reibungsintensive Beschichtung mindestens einer der Führungsrollen (4, 5, 6) oder ihrer Aufnahmen oder dass die Dämpfung durch mindestens einen zwischen den Führungsrollen (4, 5, 6) angeordneten Bremssteg (8, 9) gebildet ist.

6. Getränkebereiter nach einem der vorstehend genannten Ansprüche,
**dadurch gekennzeichnet, dass**
mehrere Führungsrollen (4, 5, 6) hintereinander, in wenigstens einer Reihe unter der Abtropfschale (2) angeordnet sind.

7. Getränkebereiter nach einem der vorstehend genannten Ansprüche,
**dadurch gekennzeichnet, dass**
an mindestens einer der Abtropfschale (2) zugewandten Seite wenigstens einer Innenwand (11) des Getränkebereiters die aktivierbare, in Auszugsrichtung der Abtropfschale (2) wirkende Ausstoßvorrichtung (10) angebracht ist.

8. Getränkebereiter nach einem der Ansprüche 1 bis 7,
**dadurch gekennzeichnet, dass**
die mindestens eine aktivierbare, entgegen der Auszugsrichtung der Abtropfschale (2) wirkende und mit wenigstens einer Innenwand (11) des Getränkebereiters korrespondierende Ausstoßvorrichtung (10) an der Abtropfschale (2) angeordnet ist.

9. Getränkebereiter nach einem der vorstehend genannten Ansprüche,
**dadurch gekennzeichnet, dass**
die Ausstoßvorrichtung (10) einen beweglichen Stift (12) aufweist, der mit progressiv ansteigender Kraft ausfahrbar ist.

10. Getränkebereiter nach einem der vorstehend genannten Ansprüche,
**dadurch gekennzeichnet, dass**
die Bewegungsenergie der Ausstoßvorrichtung (10) durch eine mechanische Feder, eine Pneumatik, eine Hydraulik, einen Elektromotor oder durch einen Elektromagneten bereitgestellt ist.

11. Getränkebereiter nach einem der vorstehend genannten Ansprüche,
**dadurch gekennzeichnet,**
**dass** zusätzlich ein Abdeckring (13) vorhanden ist, der auf den oberen Rand der Abtropfschale (2) aufgesetzt ist.

12. Getränkebereiter nach Anspruch 11,
**dadurch gekennzeichnet,**
**dass** zur Fixierung des Abdeckringes (13) eine Klemm- oder Schnappverbindung vorgesehen ist.

## Claims

1. Beverage preparation means for producing a beverage, comprising a beverage outlet which is arranged above a drip plate (1) suitable for a vessel which is to be filled with said beverage to be placed thereon, a drip tray (2) for collecting liquid residues and which can be removed from the beverage preparation means for emptying and/or cleaning being present below the drip plate (1),
**characterised in that**
at least one guide roller (4, 5, 6) for assisting the movement of the drip tray (2) is present in the base (3) of the beverage preparation means, in the central region below said drip tray (2), on which guide roller said drip tray is guided for smooth removal from the beverage preparation means (2).

2. Beverage preparation means according to claim 1,
**characterised in that**
the beverage preparation means comprises at least one ejection device (10) which corresponds with the drip tray (2).

3. Beverage preparation means according to either claim 1 or claim 2,
**characterised in that**
a guide roller system (7), comprising a plurality of guide rollers (4, 5, 6), for assisting the movement of the drip tray (2) is present on the underside of said drip tray (2) or in the base of the beverage preparation means, below said drip tray (2).

4. Beverage preparation means according to any of claims 1 to 3,
**characterised in that**
at least one guide roller (4, 5, 6) comprises a damping means.

5. Beverage preparation means according to claim 4,
**characterised in that**
the damping means is formed by a brake or a friction-intensive coating on at least one of the guide rollers (4, 5, 6) or the retaining elements thereof, or **in that** the damping means is formed by at least one brake bar (8, 9) arranged between said guide rollers (4, 5, 6).

6. Beverage preparation means according to any of the preceding claims,
**characterised in that**
a plurality of guide rollers (4, 5, 6) are arranged one behind the other, in at least one row, below the drip tray (2).

7. Beverage preparation means according to any of the preceding claims,
**characterised in that**
the actuatable ejection device (10), which acts in the pull-out direction of the drip tray (2), is attached to at least one of the faces, facing said drip tray (2), of at least one inner wall (11) of the beverage preparation means.

8. Beverage preparation means according to any of claims 1 to 7,
**characterised in that**
the at least one actuatable ejection device (10), which acts counter to the pull-out direction of the drip tray (2) and corresponds with at least one inner wall (11) of the beverage preparation means, is arranged on said drip tray (2).

9. Beverage preparation means according to any of the preceding claims,
**characterised in that**
the ejection device (10) comprises a movable pin (12) which can be extended using progressively increasing force.

10. Beverage preparation means according to any of the preceding claims,
**characterised in that**
the kinetic energy of the ejection device (10) is provided by a mechanical spring, pneumatics, hydraulics, an electromotor or by an electromagnet.

11. Beverage preparation means according to any of the preceding claims,
**characterised in that**
a cover ring (13) is additionally present, which is placed on the upper edge of the drip tray (2).

12. Beverage preparation means according to claim 11,
**characterised in that**
a clamp- or snap connection is provided for fixing the cover ring (13).

## Revendications

1. Préparateur de boissons pour la réalisation d'une boisson, avec une sortie de boisson qui est disposée au-dessus d'une plaque d'égouttage (1) appropriée pour la pose d'un récipient à remplir avec la boisson, une coque d'égouttage (2), pouvant être enlevée du préparateur de boissons pour le vidage et/ou pour le nettoyage, étant présente pour la récupération des restes de liquide,
**caractérisé en ce que**,
dans le fond (3) du préparateur de boissons, dans la zone centrale au-dessous de la coque d'égouttage (2), il existe au moins un galet de guidage (4, 5, 6) qui facilite le mouvement de la coque d'égouttage (2) et sur lequel la coque d'égouttage est guidée pour l'enlèvement aisé hors du préparateur de boissons (2).

2. Préparateur de boissons selon la revendication 1,
**caractérisé en ce que**
le préparateur de boissons présente au moins un dispositif d'éjection (10) correspondant à la coque d'égouttage (2).

3. Préparateur de boissons selon la revendication 1 ou 2,
**caractérisé en ce que**,
sur le côté inférieur de la coque d'égouttage (2) ou bien dans le fond (3) du préparateur de boissons, au-dessous de la coque d'égouttage (2), il existe un système (7) de galets de guidage avec plusieurs galets de guidage (4, 5, 6) qui facilite le mouvement de la coque d'égouttage (2).

4. Préparateur de boissons selon la revendication 1, 2 ou 3,
**caractérisé en ce**
**qu'**au moins un galet de guidage (4, 5, 6) présente un amortissement.

5. Préparateur de boissons selon la revendication 4,
**caractérisé en ce que**
l'amortissement est formé par un frein ou par un revêtement à fort coefficient de friction d'au moins un des galets de guidage (4, 5, 6) ou de leurs logements, ou **en ce que** l'amortissement est formé par au moins une barrette de freinage (8, 9) disposée entre les galets de guidage (4, 5, 6).

6. Préparateur de boissons selon l'une des revendications citées précédemment,
**caractérisé en ce que**
plusieurs galets de guidage (4, 5, 6) sont disposés les uns derrière les autres, en au moins une rangée sous la coque d'égouttage (2).

7. Préparateur de boissons selon l'une des revendications citées précédemment,
**caractérisé en ce que**,
le dispositif d'éjection (10), pouvant être activé et agissant dans la direction d'extraction de la coque d'égouttage (2), est mis en place sur au moins un côté, tourné vers la coque d'égouttage (2), d'au moins une paroi intérieure (11) du préparateur de boissons.

8. Préparateur de boissons selon l'une des revendications 1 à 7,
**caractérisé en ce que**
le dispositif d'éjection (10) au moins au nombre de un, pouvant être activé et agissant à l'inverse de la direction d'éjection de la coque d'égouttage (2) et correspondant à au moins une paroi intérieure (11) du préparateur de boissons, est disposé sur la coque d'égouttage (2).

9. Préparateur de boissons selon l'une des revendications citées précédemment,
**caractérisé en ce que**
le dispositif d'éjection (10) présente une broche (12) mobile qui peut être sortie avec une force croissant progressivement.

10. Préparateur de boissons selon l'une des revendications citées précédemment,
**caractérisé en ce que**
l'énergie de mouvement du dispositif d'éjection (10) est fournie par un ressort mécanique, un système pneumatique, un système hydraulique, un moteur électrique ou bien par un électroaimant.

11. Préparateur de boissons selon l'une des revendications citées précédemment,
**caractérisé en ce**
**qu'**il existe en plus un anneau de couverture (13) qui est placé sur le bord supérieur de la coque d'égouttage (2).

12. Préparateur de boissons selon la revendication 11,
**caractérisé en ce**
**qu'**il est prévu un raccordement par serrage ou par encliquetage pour la fixation de l'anneau de couverture (13).
